# FASCICULE DE BREVET EUROPEEN

(11) **EP 1 917 202 B1**
(45) Date de publication et mention de la délivrance du brevet: **18.11.2009**
(21) Numéro de dépôt: 06777896.9
(22) Date de dépôt: 21.07.2006
(51) Int. Cl.: B65D 83/14

(54) **VALVE DE DISTRIBUTION DE PRODUIT FLUIDE**
FLUIDPRODUKTABGABEVENTIL
FLUID PRODUCT DISPENSING VALVE

(30) Priorité: 21.07.2005 FR 0507770
(43) Date de publication de la demande: 07.05.2008
(73) Titulaire: Valois SAS, 27110 Le Neubourg (FR)
(72) Inventeur: FONTELA, Jacques, 27110 Vitot (FR); SAVALLE, Matthieu, 76000 Rouen (FR)
(74) Mandataire: CAPRI
(86) Numéro de dépôt international: PCT/EP2006/064521
(87) Numéro de publication internationale: WO 2007/010043

(56) Documents cités:
- EP-A- 1 394 074
- FR-A- 1 598 257
- FR-A- 2 615 172
- US-A- 2 904 229
- US-B1- 6 186 372

## Description

La présente invention concerne une valve de distribution de produit fluide, et plus particulièrement une valve doseuse adaptée à distribuer une quantité dosée à chaque actionnement (p.e. FR 2 615 172).

Les valves, en particulier les valves doseuses, fonctionnant avec un gaz propulseur, sont bien connues dans l'état de la technique. Elles comportent généralement un corps de valve dans lequel coulisse une soupape entre une position de repos et une position de distribution. Une chambre de dosage est prévue dans le corps de valve, le contenu de ladite chambre de dosage étant vidé à chaque actionnement, et se remplissant par la suite pour préparer la dose suivante. Généralement, ce type de valve est utilisé en position inversée, c'est-à-dire avec la valve disposée en dessous du réservoir en position d'utilisation. Dans ce cas, la chambre de dosage se remplit généralement par gravité après vidage lors d'un actionnement précédent. Lorsque le dispositif de distribution est destiné à être stocké en position droite, c'est-à-dire avec la valve disposée au-dessus du réservoir, la chambre de dosage se vide et le produit revient dans le réservoir. Dans ce cas, lors de la prochaine utilisation, lorsque l'utilisateur renverse à nouveau le dispositif en position inversée, la chambre de dosage se remplit à nouveau et le dispositif est donc prêt à être réutilisé.

La présente invention a pour but de fournir une valve de distribution de produit fluide de ce type, qui fonctionne de manière plus sûre et plus fiable, tout en étant peu coûteuse à fabriquer et à assembler.

La présente invention a également pour but de fournir une valve de distribution de produit fluide permettant un retour contrôlé du produit contenu dans cette chambre de dosage vers le réservoir.

La présente invention a donc pour objet une valve de distribution de produit fluide telle que décrite dans la revendication 1.

Des variantes avantageuses de l'invention sont décrites dans les revendications dépendantes.

La présente invention a aussi pour objet un dispositif de distribution de produit fluide comportant une valve telle que décrite ci-dessus.

D'autres caractéristiques et avantages de la présente invention apparaîtront plus clairement au cours de la description détaillée suivante de plusieurs modes de réalisation de celle-ci, faite en référence aux dessins joints, donnés à titre d'exemples non limitatifs, et sur lesquels,
La figure 1 est une vue schématique en section transversale d'une valve selon un premier mode de réalisation de l'invention, en position droite,
La figure 2 est une vue similaire à celle de la figure 1, en position inversée ;
La figure 3 est une vue similaire à celle de la figure 1, montrant un second mode de réalisation de la présente invention ;
La figure 4 est une vue similaire à la figure 2 du second mode de réalisation ;
La figure 5 est une vue similaire à celle de la figure 1, montrant un troisième mode de réalisation de la présente invention ;
La figure 6 est une vue similaire à la figure 2 du troisième mode de réalisation de l'invention ;
La figure 7 est une vue similaire à celle de la figure 1, montrant un quatrième mode de réalisation de la présente invention ;
La figure 8 est une vue similaire à celle de la figure 2 du quatrième mode de réalisation de la présente invention
La figure 9 est une vue similaire à celle de la figure 1, montrant un cinquième mode de réalisation de la présente invention ;
La figure 10 est une vue similaire à celle de la figure 2 du cinquième mode de réalisation;
La figure 11 est une vue similaire à celle de la figure 1, montrant un sixième mode de réalisation de la présente invention ; et
La figure 12 est une vue similaire à celle de la figure 2 du sixième mode de réalisation de l'invention.

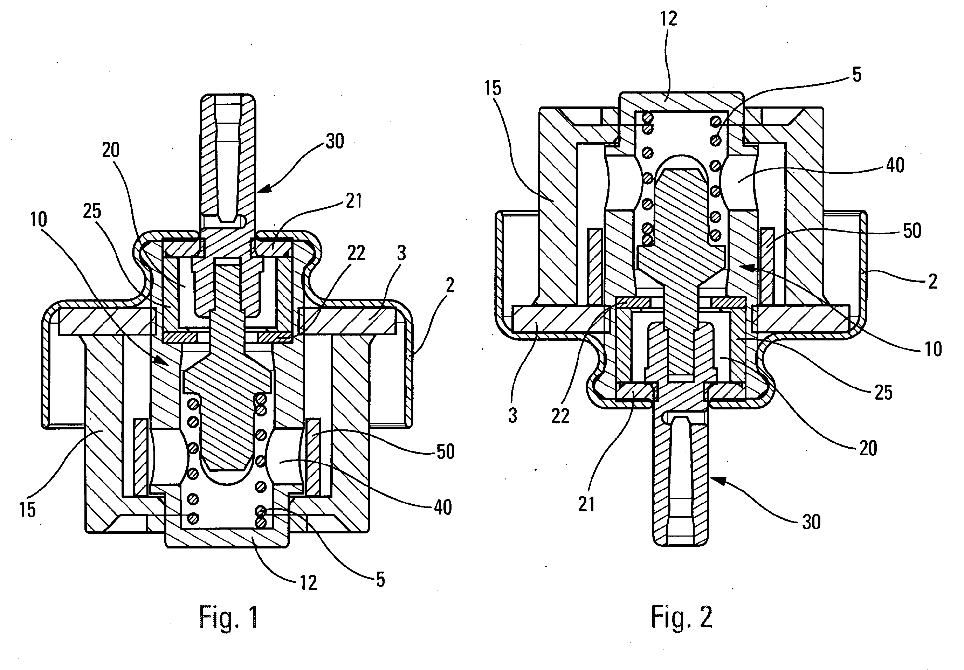

De manière classique, la valve de distribution de produit fluide comporte un corps de valve 10 définissant une chambre de dosage 20. Une soupape 30 coulisse dans le corps de valve entre une position de repos et une position d'utilisation, dans laquelle la soupape est enfoncée à l'intérieur de la valve. Un ressort de rappel 5 assure le retour automatique de la soupape vers sa position de repos lorsque l'utilisateur n'actionne plus la valve. La chambre de dosage 20 est avantageusement définie entre deux joints 21, 22, coopérant tous deux avec la soupape 30 en position d'utilisation pour isoler la chambre de dosage du réservoir (non représenté) lors de l'expulsion de la dose qu'elle contient. Un manchon creux 25 peut former les parois latérales de la chambre de dosage 20. La valve selon l'invention est avantageusement fixée sur un réservoir contenant du produit fluide (non représenté), par exemple au moyen d'une capsule à sertir 2, avec de préférence interposition d'un joint de col 3. Toutefois, tout autre moyen de fixation est aussi envisageable. Eventuellement, une bague externe 15 peut être assemblée autour du corps de valve 10, comme visible sur lés figures 1 à 4. Par ailleurs, une tête de distribution ou d'actionnement est généralement assemblée sur la soupape pour permettre à l'utilisateur d'actionner manuellement ladite valve. En variante, ladite valve peut être assemblée dans un corps d'inhalateur, l'actionnement pouvant se faire par pression sur le fond du réservoir (non représenté). D'autres structures et utilisations de valves connues sont aussi envisageables.

De manière classique, un passage d'entrée 40 est réalisé entre la valve et le réservoir pour permettre au produit fluide contenu dans le réservoir de remplir la chambre de dosage 20 après chaque actionnement. Ce passage peut au moins partiellement être défini par une ouverture du corps de valve, par exemple une ouverture latérale comme cela est représenté sur les figures. Bien entendu, ce passage 40 peut s'étendre jusqu'à la chambre de dosage 20, auquel cas la soupape 30 définit aussi une partie de ce passage.

Selon l'invention, il est prévu un élément de fermeture 50 qui coopère avec ledit passage d'entrée 40. Cet élément de fermeture 50 est mobile entre une position d'ouverture, dans laquelle ledit passage d'entrée 40 est ouvert, et une position de fermeture dans laquelle ledit passage d'entrée 40 est au moins partiellement fermé. Avantageusement, comme cela est représenté dans l'exemple représenté sur les dessins, l'élément de fermeture 50 se déplace entre ses positions d'ouverture et de fermeture par gravité. Ainsi, lorsque la valve est en position droite, qui est généralement la position de stockage, dans laquelle la valve est disposée au dessus du réservoir, l'élément de fermeture 50 se déplace par gravité dans sa position de fermeture. Lorsque l'utilisateur souhaite utiliser les dispositifs et qu'il retourne la valve en position inversée, alors l'élément de fermeture 50 se déplace par gravité dans sa position d'ouverture.

Selon l'invention, la fermeture de l'élément de fermeture 50 est réalisée de manière non étanche, de sorte que lorsque la valve est en position inversée, avec l'élément de fermeture 50 en position de fermeture, le produit contenu à l'intérieur de la valve, en particulier à l'intérieur de la chambre de dosage 20, peut malgré tout s'écouler de façon contrôlée ou non hors de celle-ci, également par gravité, à travers ledit passage d'entrée 40.

L'inconvénient de maintenir la dose dans la chambre de dosage 20 pendant le stockage est que cette dose peut ne plus être totalement homogène. En particulier, le produit actif, peut dans certains cas, par sédimentation, se concentrer dans la partie inférieure de la chambre de dosage 20, de sorte que lors de l'actionnement, la dose n'est pas parfaitement homogène. De manière générale, l'invention procure l'avantage d'une absence d'amorçage. En effet, lors de l'actionnement, l'utilisateur retourne le dispositif et la chambre se remplit (ou se complète dans l'hypothèse où elle n'était pas complètement vide), et la valve est opérationnelle sans nécessiter d'amorçage. De même, on garantit ainsi une dose complète à chaque actionnement du fait que la chambre de dosage est remplie ou complétée avant chaque actionnement.

Les figures 1 et 2 montrent un premier mode de réalisation de l'invention. Dans ce premier mode de réalisation, l'élément de fermeture 50 est un manchon coulissant à l'extérieur du corps de valve 10. Avantageusement, l'élément de fermeture 50 coopère en position de fermeture avec la bague externe 15 assemblée autour du corps de valve 10 et/ou directement avec le corps de valve 10.

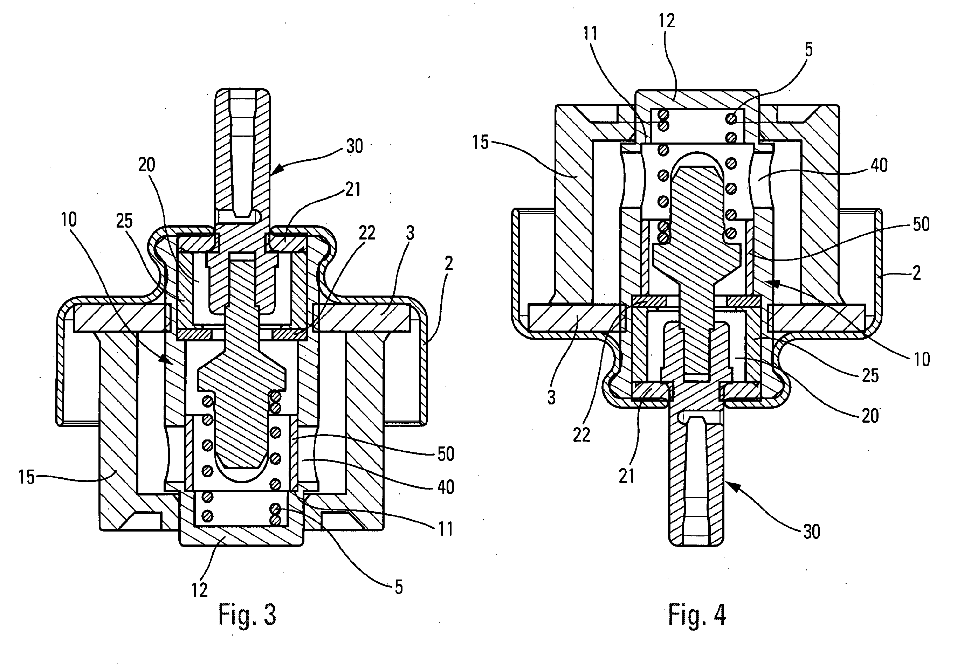

Les figures 3 et 4 montrent un second mode de réalisation, dans lequel le manchon 50 coulisse à l'intérieur du corps de valve. Dans ce cas, l'élément de fermeture 50 coopère avantageusement avec un épaulement 11 prévu dans le corps de valve 10. En variante, il peut aussi coopérer avec le fond 12 du corps de valve.

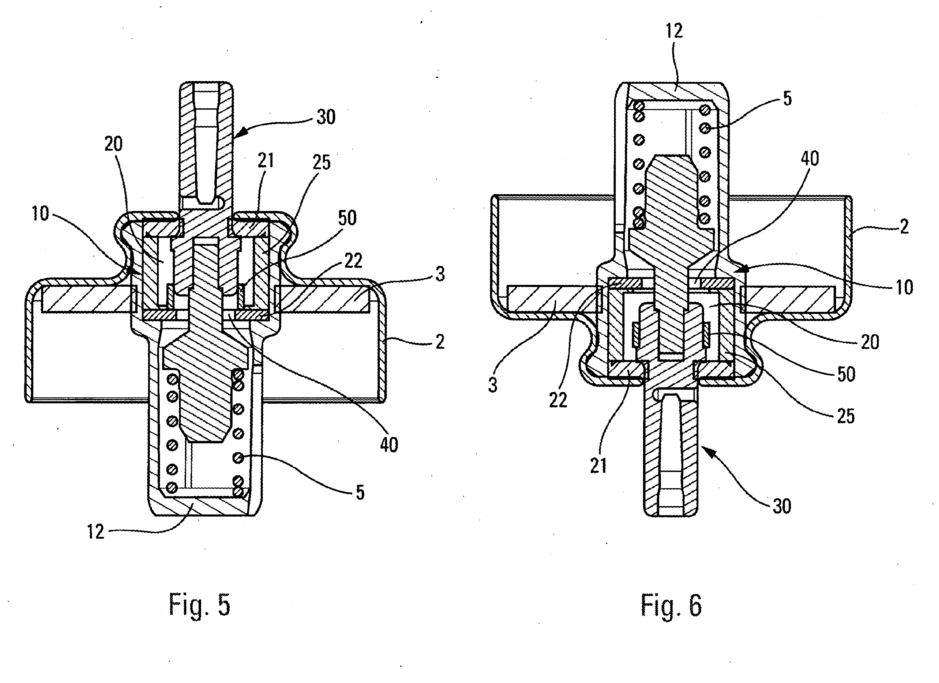

Les figures 5 et 6 montrent un troisième mode de réalisation dans lequel l'élément de fermeture 50 est également un manchon coulissant, mais cette fois ci autour de la soupape 30. En particulier, dans cet exemple, le manchon coulissant 50 est disposé dans la chambre de dosage 20.

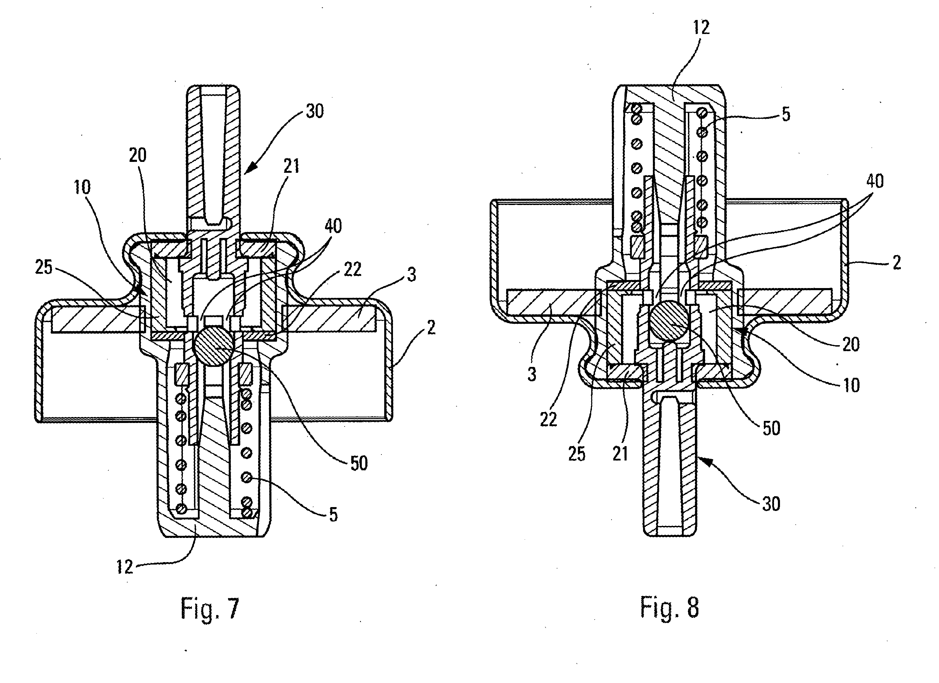

Les figures 7 et 8 représentent un quatrième mode de réalisation de l'invention dans lequel le passage d'entrée 40 s'étend au moins partiellement à l'intérieur de la soupape 30. Dans ce mode de réalisation, l'élément de fermeture 50 est formé par une bille disposée à l'intérieur de la soupape 30.

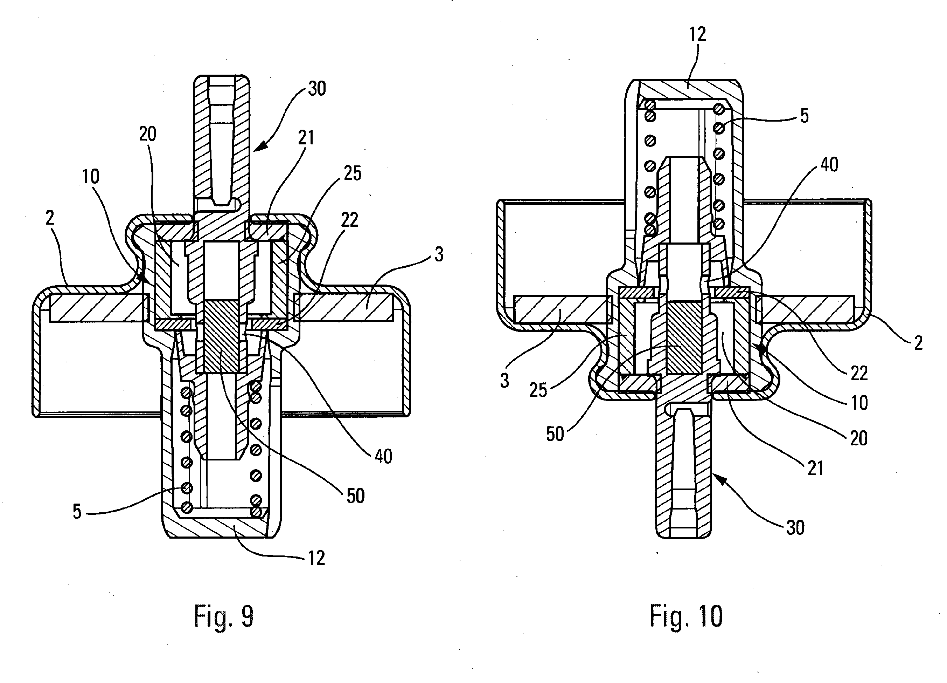

Les figures 9 et 10 représentent un cinquième mode de réalisation de l'invention, dans lequel l'élément de fermeture 50 est également disposé à l'intérieur de la soupape, mais dans ce cas là est formé par un plot ou tube coulissant.

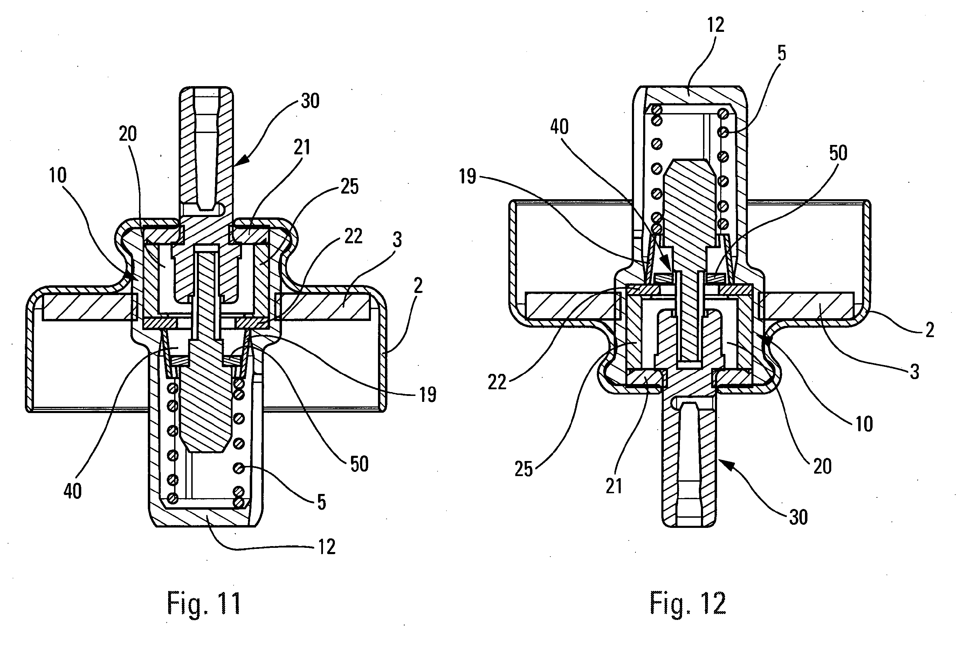

Les figures 11 et 12 montrent un sixième mode de réalisation de l'invention, dans lequel l'élément de fermeture 50 est coulissant autour de la soupape 30, mais contrairement à l'exemple des figures 5 et 6, l'élément de fermeture 50 coulisse autour de la soupape 30 à l'extérieur de chambre de dosage 20. Dans cet exemple, l'élément de fermeture 50 peut être une bague annulaire adaptée à coopérer d'une part avec la partie intérieure de la soupape 30 et d'autre part avec une paroi latérale du corps de valve 10. Dans l'exemple représenté sur les figures 11 et 12, l'élément de fermeture 50 coopère en fait avec un manchon tronconique 19 s'étendant à l'intérieur du corps de valve 10 à partir du joint inférieur 22 de la chambre de dosage 20. D'autres mises en oeuvre pourraient évidemment également être envisagées.

Ainsi, comme cela a été décrit ci-dessus, diverses solutions sont envisageables pour réaliser l'invention. Le principe de l'invention consiste à prévoir un élément mobile 50 à l'intérieur d'une valve doseuse, cet élément mobile se déplaçant par gravité entre sa position d'ouverture et sa position de fermeture. La position de fermeture est une position de fermeture non étanche, permettant un écoulement contrôlé de produit en retour vers le réservoir.

Les matériaux utilisables pour réaliser cet élément de fermeture 50 peuvent être de tous types connus, en particulier les matériaux habituellement utilisés pour réaliser les corps de valve, les soupapes ou les joints de valve. Eventuellement, on pourrait même utiliser du métal, par exemple dans le cas d'une bille tel que décrit en référence aux figures 7 et 8.

Il est entendu également que la structure de la valve représentée sur les dessins n'est donnée qu'à titre illustratif, et que la présente invention s'applique à tout type de valve doseuse. En particulier, la forme du corps de valve, la forme de la soupape, la forme de la chambre de dosage, et/ou la forme des joints pourraient être réalisées d'une manière différente.

Bien que la présente invention ait été décrite en référence à plusieurs mode de réalisation de celle-ci, il est entendu qu'elle n'est pas limitée par les exemple représentés, et qu'un homme du métier peut y apporter toutes modification utile sans sortir du cadre de la présente invention tel que défini par les revendications annexées.

## Revendications

1. Valve de distribution de produit fluide destinée à être assemblée sur un réservoir de produit fluide, comprenant un corps de valve (10) contenant une chambre de dosage (20) et une soupape (30) coulissant de manière étanche dans ledit corps de valve (10) entre une position de repos et une position d'actionnement, ladite valve contenant un passage d'entrée (40) permettant le remplissage en produit fluide de ladite chambre de dosage (20), ladite valve comportant un élément de fermeture (50) mobile coopérant avec ledit passage d'entrée (40), entre une position d'ouverture et une position de fermeture, **caractérisée en ce que** ledit passage d'entrée (40) étant, en position de fermeture dudit élément de fermeture (50), obturé de manière non-étanche, de sorte que le produit fluide contenu à l'intérieur de la chambre de dosage (20) peut s'écouler lentement hors de celle-ci par gravité à travers ledit passage d'entrée (40), fermé par ledit élément de fermeture (50).

2. Valve selon la revendication 1, dans laquelle ledit élément de fermeture (50) se déplace entre ses positions d'ouverture et de fermeture par gravité.

3. Valve selon la revendication 1 ou 2, dans laquelle ledit débit d'écoulement en position de fermeture de l'élément de fermeture est prédéterminable.

4. Valve selon l'une quelconque des revendications précédentes, dans laquelle ledit passage d'entrée (40) est réalisé dans le corps de valve (10).

5. Valve selon la revendication 4, dans laquelle ledit élément de fermeture (50) est un manchon coulissant par rapport au corps de valve.

6. Valve selon la revendication 4 ou 5, dans laquelle ledit élément de fermeture (50) coulisse sur l'extérieur du corps de valve (10).

7. Valve selon la revendication 4 ou 5, dans laquelle ledit élément de fermeture (50) coulisse à l'intérieur du corps de valve (10).

8. Valve selon l'une quelconque des revendications 1 à 3, dans laquelle ledit passage d'entrée (40) est réalisé dans la soupape (30).

9. Valve selon la revendication 8, dans laquelle ledit élément de fermeture (50) est un manchon coulissant autour de ladite soupape (30).

10. Valve selon la revendication 9, dans laquelle ledit manchon (50) est disposé dans ladite chambre de dosage (20).

11. Valve selon la revendication 8, dans laquelle ledit élément de fermeture (50) est un élément mobile à l'intérieur de ladite soupape (30).

12. Valve selon la revendication 11, dans laquelle ledit élément mobile est une bille.

13. Valve selon la revendication 11, dans laquelle ledit élément mobile est un plot.

14. Dispositif de distribution de produit fluide comportant un réservoir de produit fluide, **caractérisé en ce qu'**il comporte une valve selon l'une quelconque des revendications précédentes.

## Claims

1. A fluid dispenser valve for assembling on a fluid reservoir, the valve comprising a valve body (10) containing a metering chamber (20), and a valve member (30) that is slidable in leaktight manner in said valve body (10) between a rest position and an actuated position, said valve containing an inlet passage (40) enabling said metering chamber (20) to be filled with fluid, said valve including a movable closure element (50) that co-operates with said inlet passage (40), between an open position and a closed position, **characterized in that** said inlet passage (40) is closed in non-leaktight manner in the closed position of said closure element (50), such that the fluid contained inside the metering chamber (20) can, by gravity, slowly flow out of said metering chamber via said inlet passage (40) that is closed by said closure element (50).

2. A valve according to claim 1, in which said closure element (50) is displaced by gravity between its open and closed positions.

3. A valve according to claim 1 or claim 2, in which said flow rate in the closed position of the closure element is predeterminable.

4. A valve according to any preceding claim, in which said inlet passage (40) is formed in the valve body (10).

5. A valve according to claim 4, in which said closure element (50) is a sleeve that slides relative to the valve body.

6. A valve according to claim 4 or claim 5, in which said closure element (50) slides over the outside of the valve body (10).

7. A valve according to claim 4 or claim 5, in which said closure element (50) slides inside the valve body (10).

8. A valve according to any one of claims 1 to 3, in which said inlet passage (40) is formed in the valve member (30).

9. A valve according to claim 8, in which said closure element (50) is a sleeve that slides about said valve member (30).

10. A valve according to claim 9, in which said sleeve (50) is disposed in said metering chamber (20).

11. A valve according to claim 8, in which said closure element (50) is an element that is movable inside said valve member (30).

12. A valve according to claim 11, in which said movable element is a bead.

13. A valve according to claim 11, in which said movable element is a lug.

14. A fluid dispenser device including a fluid reservoir, the device being **characterized in that** it includes a valve according to any preceding claim.

## Patentansprüche

1. Fluidprodukt-Abgabeventil zur Montage auf einem Fluidprodukt-Vorratsbehälter, aufweisend einen Ventilkörper (10), der eine Dosierkammer (20) enthält, und ein Ventilorgan (30), das in dem Ventilkörper (10) zwischen einer Ruhestellung und einer Betätigungsstellung gleitet, wobei das Ventil einen Einlassdurchlass (40) aufweist, der ein Nachfüllen der Dosierkammer (20) mit Fluidprodukt erlaubt, wobei das Ventil ein bewegliches Schließelement (50) aufweist, das mit einem Einlassdurchlass (40) zwischen einer Öffnungsstellung und einer Schließstellung zusammen wirkt, **dadurch gekennzeichnet, dass** der Einlassdurchlass (40) in der Schließstellung des Schließelements (50) in nicht dichter Weise derart verschlossen ist, dass das im Innern der Dosierkammer (20) enthaltene Fluidprodukt aufgrund von Schwerkraft durch den Einlassdurchlass (40) langsam ablaufen kann, der durch das Schließelement (50) verschlossen ist.

2. Ventil nach Anspruch 1, wobei das Schließelement (50) sich zwischen seinen Öffnungs- und Schließstellungen aufgrund von Schwerkraft verschiebt.

3. Ventil nach Anspruch 1 oder 2, wobei die Ablaufmenge in der Schließstellung des Schließelements vorbestimmbar ist.

4. Ventil nach einem der vorangehenden Ansprüche, wobei der Einlassdurchlass (40) in dem Ventilkörper (10) vorgesehen ist.

5. Ventil nach Anspruch 4, wobei das Schließelement (50) eine Muffe ist, die in Bezug auf den Ventilkörper gleitet.

6. Ventil nach Anspruch 4 oder 5, wobei das Schließelement (50) auf der Außenseite des Ventilkörpers (10) gleitet.

7. Ventil nach Anspruch 4 oder 5, wobei das Schließelement (50) im Innern des Ventilkörpers (10) gleitet.

8. Ventil nach einem der Ansprüche 1 bis 3, wobei der Einlassdurchlass (40) in dem Ventilorgan (30) vorgesehen ist.

9. Ventil nach Anspruch 8, wobei das Schließelement (50) eine Muffe ist, die um das Ventilorgan (30) gleitet.

10. Ventil nach Anspruch 9, wobei die Muffe (50) in der Dosierkammer (20) angeordnet ist.

11. Ventil nach Anspruch 8, wobei das Schließelement (50) ein bewegliches Element im Innern des Ventilorgans (30) ist.

12. Ventil nach Anspruch 11, wobei das bewegliche Element eine Kugel ist.

13. Ventil nach Anspruch 11, wobei das bewegliche Element ein Kontakt ist.

14. Fluidprodukt-Abgabevorrichtung, aufweisend einen Fluidprodukt-Vorratsbehälter, **dadurch gekennzeichnet, dass** sie ein Ventil nach einem der vorangehenden Ansprüche aufweist.
